# FASCICULE DE BREVET EUROPEEN

(11) **EP 2 735 505 B1**
(45) Date de publication et mention de la délivrance du brevet: **21.06.2017**
(21) Numéro de dépôt: 13191464.0
(22) Date de dépôt: 04.11.2013
(51) Int. Cl.: B64C 13/18, B64C 25/18, B64C 25/22, F16F 9/06, B60G 15/12, F16H 25/20

(54) **Actionneur mécanique avec dispositif d'amortissement hydraulique**
Mechanisches Stellglied mit hydraulischer Dämpfungsvorrichtung
A mechanical actuator with a hydraulic damper device

(30) Priorité: 22.11.2012 FR 1203139
(43) Date de publication de la demande: 28.05.2014
(73) Titulaire: Safran Landing Systems, 78140 Vélizy-Villacoublay (FR)
(72) Inventeur: Leglize, Ludovic, 78140 Velizy-Villacoublay (FR)
(74) Mandataire: Parzy, Benjamin Alain

(56) Documents cités:
- EP-A1- 1 515 051
- EP-A2- 2 192 041
- FR-A1- 2 946 618
- US-A- 3 823 758
- US-A1- 2010 282 901

## Description

L'invention concerne un actionneur mécanique muni d'un dispositif d'amortissement piloté.

### ARRIERE PLAN DE L'INVENTION

L'invention concerne un actionneur à fonctionnement électromécanique et à amortissement hydraulique, particulièrement intéressant pour assurer la manoeuvre d'atterrisseurs d'aéronef entre une position déployée et une position rétractée. EP 2192041 A2 divulgue un actionneur comprenant les caractéristiques du préambule de la revendication 1.

### ARRIERE-PLAN DE L'INVENTION

On connaît des actionneurs hydrauliques de type télescopique comportant un corps définissant une cavité cylindrique et une tige s'étendant au travers d'une extrémité de la cavité en étant solidaire d'un piston monté à coulissement axial dans la cavité de façon à délimiter dans celle-ci deux chambres hydrauliques. Il est connu, lors d'un déplacement de la tige, d'organiser un laminage sur la sortie de la chambre dont le fluide est expulsé pour réaliser un amortissement hydraulique. Un tel laminage crée une résistance proportionnelle au carré de la vitesse de déplacement de la tige.

On connaît également des actionneurs électrohydrauliques comportant une pompe électrique qui est agencée pour transvaser du fluide d'une chambre à l'autre de l'actionneur. Il est également possible d'organiser un amortissement en laminant le fluide expulsé de l'une des chambres lors du mouvement de la tige. Un tel actionneur n'est cependant pas susceptible d'un fonctionnement en secours dans laquelle la tige est entraînée par la charge à laquelle elle est attelée, à moins que la pompe ne soit réversible et puisse être libérée.

On connaît par ailleurs des actionneurs mécaniques comportant une vis s'étendant à l'intérieur de la tige pour coopérer avec un écrou solidaire de la tige, la vis étant entraînée en rotation par un moteur dont l'activation provoque le déplacement axial de la tige. Dans de tels actionneurs, l'amortissement peut être assuré en organisant une résistance, par exemple de type frictionnelle ou électromagnétique, au déplacement de la tige. Cependant, le premier type de résistance est essentiellement indépendant de la vitesse de déplacement de la tige, tandis que le deuxième type de résistance est assez difficile à organiser et est en général fonction de la vitesse de déplacement de la tige, ce qui peut se révéler insuffisant dans certaines applications. En outre, ces amortissements posent de nombreux problèmes en service, tels que l'usure ou le manque de fiabilité.

On connaît enfin du document FR2946618 un actionneur électromécanique à amortissement hydraulique comportant un corps dans lequel une tige est montée pour coulisser, l'actionneur comportant une vis s'étendant à l'intérieur de la tige pour coopérer avec un écrou solidaire de la tige, la vis étant entraînée en rotation par un moteur. La tige est associée à un piston qui coulisse dans une cavité du corps pour y définir deux chambres, celles-ci étant remplies de fluide hydraulique et étant mises en communication par des moyens de transvasement équipés d'au moins un organe de régulation adapté à laminer du fluide expulsé d'une des chambres, au moins pour un sens de déplacement de la tige.

Dans ce type d'actionneur, les deux chambres sont en permanence remplies de fluide hydraulique, et nécessitent en général d'être connectées à un accumulateur pour fournir ou recevoir un débit différentiel entre les deux chambres. Le transvasement de fluide, et donc l'amortissement hydraulique, accompagne chacun des mouvements de la tige, alors que lors d'un fonctionnement normal, un tel amortissement n'est pas forcément nécessaire.

### OBJET DE L'INVENTION

L'invention vise à proposer un actionneur à actionnement mécanique présentant un amortissement dans le sens de la rentrée de la tige pouvant être commandé à la demande.

### BREVE DESCRIPTION DE L'INVENTION

En vue de la réalisation de ce but, on propose un actionneur comportant un corps dans lequel une tige est montée pour coulisser, l'actionneur comportant une vis s'étendant à l'intérieur de la tige pour coopérer avec un écrou solidaire de la tige, la vis étant entraînée en rotation par un moteur, et dans lequel, selon l'invention, une chambre hydraulique remplie de fluide hydraulique est ménagée dans l'actionneur au moyen d'un piston flottant coulissant à étanchéité contre la tige dans l'actionneur, la chambre hydraulique étant fluidiquement reliée à un accumulateur au moyen d'une électrovanne commandable entre un état fermé dans lequel la chambre est isolée de l'accumulateur, et un état passant dans lequel la chambre hydraulique et l'accumulateur sont en communication, une résistance calibrée étant exercée à l'encontre d'un passage de fluide hydraulique de la chambre vers l'accumulateur qui est provoqué lorsqu'un mouvement de la tige dans l'actionneur provoque une diminution du volume de la chambre hydraulique.

Pour la compréhension de l'invention, le terme piston flottant désigne le fait que le piston n'est pas fixé mécaniquement vis-à-vis d'une pièce externe au piston. Par conséquent, le piston flottant est apte à coulisser seul et de manière étanche contre et le long de la tige, sans être poussé ou tiré, pour se déplacer axialement par rapport à la tige, par une autre pièce que ce piston qui serait liée mécaniquement à ce piston. Ce déplacement du piston flottant, indépendant du déplacement axial de toute autre pièce liée mécaniquement au piston, est possible simplement en variant la pression à l'intérieur de la chambre hydraulique à l'aide de l'électrovanne reliant fluidiquement et sélectivement la chambre hydraulique et l'accumulateur. Ainsi, le déplacement d'un piston flottant est possible simplement en appliquant un différentiel de pression entre des faces opposées de ce piston et sans avoir à faire coopérer mécaniquement ce piston avec une autre pièce externe au piston comme une tige de piston. On peut ainsi enclencher ou non la fonction d'amortissement en déplaçant hydrauliquement le piston, sans pour cela nécessiter l'usage d'une pièce mécanique fixée au piston pour le déplacer.Le fonctionnement de l'actionneur de l'invention est le suivant. Lors d'un fonctionnement mécanique normal, sans amortissement, la chambre hydraulique est de préférence maintenue à un volume minimal, le fluide étant maintenu emprisonné dans l'accumulateur par l'électrovanne. Si l'on souhaite mettre en oeuvre un amortissement hydraulique, il suffit de commander l'électrovanne pour la placer dans l'état passant. Le fluide hydraulique va alors être transféré de l'accumulateur vers la chambre hydraulique, ce qui provoque le déplacement du piston flottant jusqu'à ce qu'il bute contre une butée interne de l'actionneur. Lors de ce déplacement, le piston flottant coulisse à étanchéité le long de la tige, soit contre une paroi interne de la tige, soit contre une paroi externe de la tige, provoquant une variation du volume de la chambre hydraulique. Comme le piston est flottant, il est apte (au moins pour certaines positions de la tige par rapport au corps) à coulisser indépendamment du mouvement de la tige par rapport au corps de l'actionneur. Un mouvement de la tige tendant à faire diminuer le volume de la chambre hydraulique ne pourra dès lors se faire qu'à l'encontre de la résistance exercée par l'électrovanne lors du passage du fluide de la chambre hydraulique, dont le volume se réduit, vers l'accumulateur.

Ce mode de fonctionnement de l'actionneur peut être utilisé lorsque la charge attelée à l'actionneur (par exemple un atterrisseur d'aéronef) provoque le déplacement de la tige lorsque la charge est motrice, par exemple sous l'effet de la gravité. L'amortissement ainsi organisé permet de réguler la vitesse de déplacement de la charge. Le moteur de l'actionneur n'est dès lors pas utilisé pour contrôler ladite vitesse, ce qui permet de le ménager. Ceci suppose bien sûr que la liaison entre l'écrou et la vis soit réversible.

Selon un aspect particulier de l'invention, l'actionneur est muni de moyens de désolidarisation commandables de l'écrou et de la tige.

Ainsi, en cas par exemple de défaillance du moteur qui provoque un blocage de la vis, il est possible de désolidariser la tige de l'écrou, et ainsi de permettre le libre coulissement de la tige sous l'effet de la charge. Avant la désolidarisation, on aura bien sûr commandé l'électrovanne pour activer l'amortissement hydraulique comme décrit ci-dessus, afin que la vitesse de déplacement de la charge puisse être contrôlée lors de la rentrée de la tige sous l'action de la charge.

Bien entendu, lorsque la charge arrive en fin de course, la tige est proche de sa position extrémale (soit entièrement rentrée, soit entièrement sortie), et la chambre hydraulique présente un volume minimal. C'est dans cette situation que l'électrovanne sera commandée pour passer à l'état fermé, emprisonnant alors l'essentiel du fluide dans l'accumulateur.

On remarquera que dans l'actionneur de l'invention, le fluide n'est utilisé que pour amortir ou freiner les mouvements de la tige, et non pour provoquer lesdits mouvements, à la différence des actionneurs à pompe intégrée, ou des actionneurs à double actionnement comme celui du document FR2859770.

Ainsi, on bénéficie de l'amortissement hydraulique uniquement lorsque celui-ci est nécessaire. On remarquera également que l'actionneur n'est pas rempli d'huile comme celui présenté dans le document FR2946618, ce qui permet un allègement significatif.

Enfin, un tel dispositif d'amortissement peut être installé a posteriori sur un actionneur existant, pour peu que l'installation d'un piston flottant coulissant à étanchéité à l'intérieur de l'actionneur soit possible. Il suffira alors de prévoir un port de sortie sur l'actionneur afin de connecter fluidiquement la chambre hydraulique ainsi crée avec un accumulateur, via l'électrovanne. Alternativement, on peut retirer le dispositif amortisseur de l'actionneur, si l'amortissement est inutile.

Selon un aspect particulièrement avantageux de l'invention, on propose un procédé de surveillance d'un actionneur selon l'invention, consistant à laisser libre un déplacement de la tige sous la seule action d'une charge attelée à la tige, et vérifier au moins un paramètre de fonctionnement de l'atterrisseur liée à l'amortissement hydraulique. En particulier, on vérifie le temps mis par la tige pour se déplacer sous l'effet de la charge à l'encontre de l'amortissement hydraulique ainsi organisé, ce qui permet d'en vérifier le bon fonctionnement.

### BREVE DESCRIPTION DES DESSINS

L'invention sera mieux comprise à la lumière de la description qui suit en référence aux figures des dessins annexés parmi lesquelles :
- la figure 1 est une vue en coupe longitudinale d'un actionneur selon un premier mode de réalisation de l'invention, lors d'un fonctionnement sans amortissement hydraulique;
- la figure 2 est une vue similaire à celle de la figure 1, montrant le fonctionnement de l'actionneur avec amortissement hydraulique activé ;
- la figure 3 est une vue similaire à celle de la figure 2, alors que la tige est en train de rentrer sous l'action de la charge ;
- la figure 4 est un schéma hydraulique de fonctionnement de l'électrovanne équipant l'actionneur des figures 1 à 3 ;
- la figure 5 est une vue en coupe longitudinale d'un actionneur selon un deuxième mode de réalisation de l'invention.

### DESCRIPTION DETAILLEE DE L'INVENTION

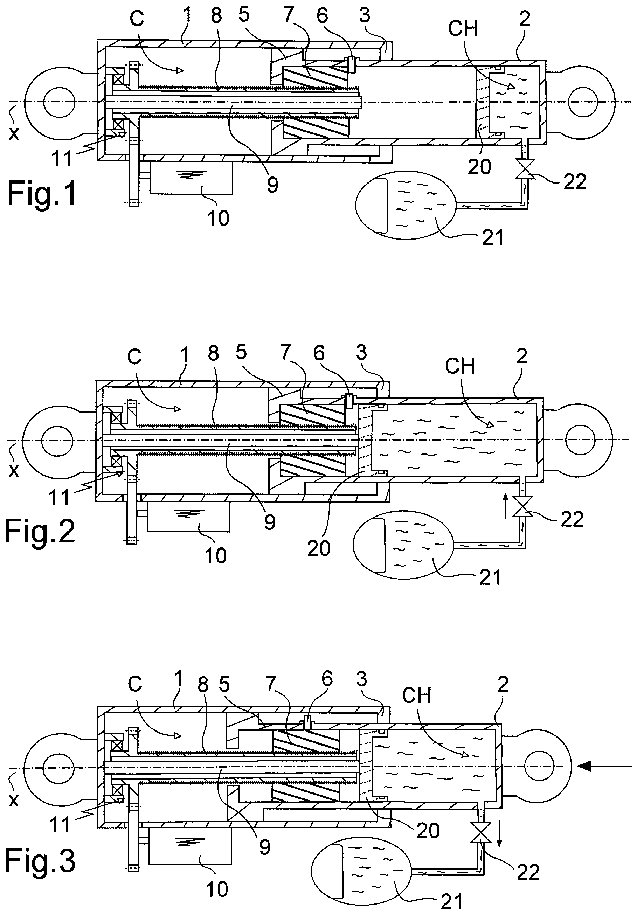

En référence à la figure 1, l'actionneur de l'invention comprend un corps 1 définissant une cavité C cylindrique s'étendant selon un axe longitudinal X. L'actionneur comporte une tige 2 creuse qui s'étend axialement dans la cavité C pour traverser un fond 3 formant palier qui ferme la cavité C à l'une de ses extrémités. La tige 2 est terminée dans la cavité C par une extrémité ouverte formant palier 5 coulissant dans la cavité C.

Le palier 5 définit intérieurement un logement qui reçoit un écrou 7 monté dans ledit logement, de sorte que la tige 2 et l'écrou 7 sont maintenus solidaires l'un de l'autre par un dispositif d'immobilisation 6 (ici un doigt). Une commande tendant à neutraliser le dispositif de verrouillage permet de désolidariser la tige 2 de l'écrou 7, de sorte que la tige 2 puisse coulisser librement indépendamment de l'écrou 7.

Une vis 8 montée à rotation dans le corps 1 s'étend axialement dans la tige 2 pour coopérer avec l'écrou 7 au moyen d'une liaison de type hélicoïdal.

La vis 8 est entraînée en rotation ici au moyen d'un moteur électrique 10 via un réducteur 11, de sorte que, lorsque la tige 2 est solidaire de l'écrou 7, une rotation de la vis 8 commandée à l'aide du moteur 10 entraîne un déplacement axial de la tige 2. A cet effet, Un moyen d'antirotation (non représenté) empêche la rotation de la tige 2 par rapport au corps 1. Ce moyen d'antirotation peut être interne à l'actionneur, mais il peut également être externe à l'actionneur, comme dans la situation où la tige et le corps de l'actionneur sont attelés à des charges au moyen de liaisons cinématiques empêchant une rotation relative de la tige vis à vis du corps.

Un piston flottant 20 est monté coulissant à étanchéité dans l'extrémité de la tige 2. Dans ce mode de réalisation, le piston 20 coulisse à étanchéité contre une paroi annulaire interne longitudinale de la tige. Le piston flottant 20 définit avec l'extrémité fermée de la tige 2 une chambre hydraulique CH de volume variable emplie de fluide hydraulique et qui est mise en communication fluidique avec un accumulateur 21 par l'intermédiaire d'une électrovanne 22 présentant deux états commandables :
- un état bloquant dans lequel la chambre hydraulique CH est isolée de l'accumulateur 21 ;
- un état passant dans lequel le fluide est libre de circuler entre l'accumulateur 21 et la chambre hydraulique CH, l'électrovanne 22 opposant une résistance calibrée au passage du fluide de la chambre hydraulique CH vers l'accumulateur 21.

Dans la situation illustrée à la figure 1, l'actionneur est dans un mode de fonctionnement normal, le mécanisme de verrouillage 6 solidarisant l'écrou 7 à la tige 2, tandis que l'électrovanne 22 est dans l'état bloquant. On remarquera également que la chambre CH présente un volume minimal. Dans cette situation, la sortie de la tige ou la rentrée de la tige 2 peut être commandée en provoquant la rotation du moteur 10, ou encore être obtenue sous l'effet moteur de la charge, sans qu'un amortissement hydraulique se manifeste.

Si l'on veut pouvoir bénéficier d'un amortissement lors de la rentrée de la tige, on commence par commander l'électrovanne 22 pour que celle-ci autorise le passage du fluide hydraulique entre l'accumulateur et la chambre hydraulique CH. Sous la pression régnant dans l'accumulateur, le fluide va tout d'abord être expulsé de celui-ci et va repousser le piston flottant 20 jusqu'à ce qu'il vienne en butée contre l'extrémité d'une butée 9 (qui s'étend ici à l'intérieur de la vis 8 pour dépasser de celle-ci), comme illustré à la figure 2.

Dans cette situation, il est possible de commander la rentrée de la tige à l'aide du moteur. Il est également possible, si la charge attelée à la tige 2 pousse naturellement celle-ci à rentrer (par exemple sous l'effet de la gravité), de laisser la tige rentrer sous l'action de la charge. Ce faisant, le volume de la chambre hydraulique va diminuer, et du fluide sera expulsé de celle-ci vers l'accumulateur. Cependant, l'électrovanne 22 exerce une résistance au passage du fluide, générant ainsi un amortissement hydraulique permettant de réguler la vitesse de déplacement de la tige 2, et donc de la charge, ceci sans l'aide du moteur. On remarquera que l'accumulateur se regonfle alors naturellement, de sorte qu'il est de nouveau prêt pour une autre séquence d'amortissement. On remarquera également que lorsque l'électrovanne 22 est dans l'état passant, la pression régnant dans l'accumulateur se communique à la chambre hydraulique. Cette pression est à l'origine d'une force résistante au mouvement de la tige qui contribue également à la régulation de la vitesse de mouvement de celle-ci.

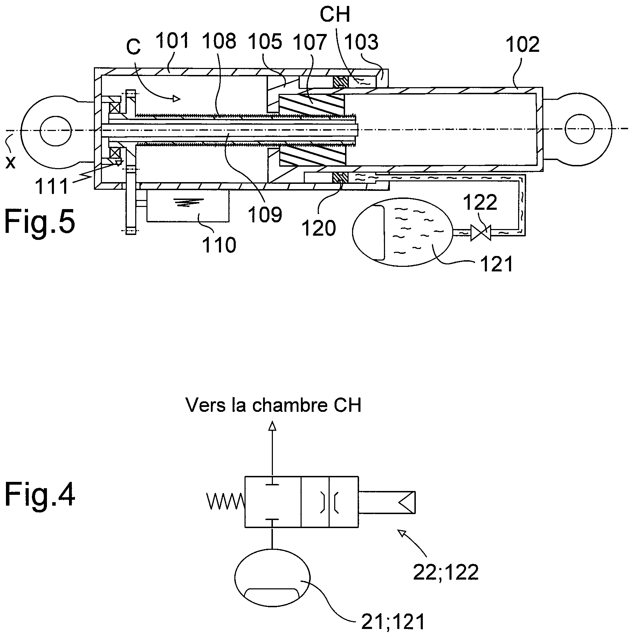

La figure 4 donne le schéma hydraulique d'une électrovanne utilisable sur l'actionneur de l'invention.

Dans une circonstance où la vis 8 serait bloquée (par exemple en raison d'une défaillance du moteur électrique 10), il est possible de commander le dispositif de verrouillage 6 pour désolidariser l'écrou 7 de la tige 2. Celle-ci est alors libre de se déplacer sous l'action de la charge alors que l'écrou reste bloqué en position axiale. C'est la situation illustrée à la figure 3. On aura bien sûr pris la précaution, auparavant, de commander l'électrovanne 22 pour bénéficier de l'amortissement hydraulique permettant de réguler la vitesse de rentrée de la tige ainsi libérée sous l'action de la charge, comme expliqué ci-dessus.

Par ailleurs, on peut profiter du dispositif de verrouillage 6 pour désolidariser intentionnellement la tige 2 de l'écrou 7, en l'absence de toute défaillance. Sous l'action de la charge, la tige 2 rentre dans l'actionneur, sa vitesse étant régulée par l'amortissement hydraulique ainsi mis en oeuvre. En mesurant par exemple le temps mis par la tige pour se déplacer de sa position sortie à sa position rentrée, il est possible de vérifier le bon fonctionnement de l'amortissement hydraulique. Cette vérification peut par exemple être effectuée en vol. Il suffit, de temps en temps, de laisser l'atterrisseur se déployer sous la seule action de la gravité, en ayant au préalable désolidarisé la vis 2 de l'écrou 7, et en ayant placé l'électrovanne 22 dans l'état passant.

Si le temps mis par la tige pour ce déplacement se trouve hors d'un intervalle déterminé, c'est alors le signe d'un dysfonctionnement de l'amortissement hydraulique, qui appelle alors une action de maintenance.

Selon maintenant un deuxième mode particulier de réalisation illustré à la figure 5 où les références des éléments communs avec ceux des figures 1 à 3 ont été augmentées d'une centaine, l'actionneur comporte toujours un corps 101, une tige coulissante 102 comportant un écrou 107 coopérant avec une vis 108 entrâinée par un moteur 110. Par ailleurs, on retrouve la chambre hydraulique CH délimitée par un piston flottant 120, la chambre étant en communication avec un accumulateur 121 au moyen d'une électrovanne 122.

Comme on l'aura remarqué, la chambre hydraulique CH est ici agencée non dans l'extrémité de la tige, mais dans l'espace annulaire entre le corps 101 et la tige 102. A cet effet, le piston flottant 120 est de forme annulaire et est interposé entre le corps 101 et la tige 102 pour coulisser à étanchéité contre / sur ces deux éléments. Un bord annulaire interne du piston flottant coulisse à étanchéité contre une paroi annulaire externe longitudinale de la tige 102 qu'il entoure. Un bord annulaire externe du piston flottant 120 coulisse à étanchéité contre une paroi annulaire interne longitudinale du corps 103. Le fonctionnement de cet actionneur est en tous points similaires à celui de l'actionneur précédemment décrit, sauf que le piston vient maintenant en butée contre la partie de la tige formant palier 105 lorsque la chambre hydraulique CH est remplie de fluide par l'ouverture de l'électrovanne.

Ainsi, dans chacun des modes décrits précédemment, le piston flottant 20, 120 est agencé pour coulisser axialement le long de la tige 2, 102 et entre une première butée axiale portée par la tige 2, 102 et une seconde butée axiale 109 portée par le corps 103.

Dans le mode de réalisation des figures 1 à 3, la première butée axiale est formée par une extrémité axiale interne de la tige 2 et la seconde butée axiale 9 est formée par la butée axiale 9 solidaire du corps 3 et qui traverse la vis 8.

Dans le second mode de réalisation de la figure 5, la première butée axiale est formée par une surface externe 105 de la tige 102 qui forme un palier de coulissement axial de la tige dans et contre une surface annulaire interne du corps 113. La seconde butée axiale est ici réalisée par une surface annulaire interne du corps dans laquelle coulisse la tige 102.

L'invention n'est bien sûr pas limitée à ce qui vient d'être décrit, mais englobe au contraire toute variante entrant dans le cadre de l'invention défini par les revendications. En particulier, bien que l'entraînement en rotation de la vis est ici assurée par un moteur électrique (en prise directe ou via un réducteur), la vis peut-être entraînée en rotation par tout autre moyen, comme par exemple un moteur hydraulique. Bien que l'actionneur illustré comporte une tige qui peut être désolidarisée de l'écrou, ceci n'est qu'une option. L'actionneur pourra ne pas comporter de mécanisme de verrouillage permettant de solidariser ou désolidariser la tige et l'écrou. Qui plus est, d'autres moyens pour libérer la tige en cas de blocage de l'actionnement mécanique peuvent être envisagés, comme par exemple une libération de la vis.

## Revendications

1. Actionneur comportant un corps (1;101) dans lequel une tige (2;102) est montée pour coulisser, l'actionneur comportant une vis (8;108) s'étendant à l'intérieur de la tige pour coopérer avec un écrou (7;107) solidaire de la tige, la vis étant entraînée en rotation par un moteur (10;110), l'actionneur comportant un accumulateur (21, 121) et une électrovanne (22, 122), **caractérisé en ce qu'**une chambre hydraulique (CH) remplie de fluide hydraulique est ménagée dans l'actionneur au moyen d'un piston flottant (20;120) coulissant à étanchéité contre la tige dans l'actionneur, la chambre hydraulique étant fluidiquement reliée à l'accumulateur (21;121) au moyen de l'électrovanne (22;122) qui est commandable entre un état fermé dans lequel la chambre est isolée de l'accumulateur, et un état passant dans lequel la chambre hydraulique et l'accumulateur sont en communication, une résistance calibrée étant exercée à l'encontre du passage de fluide hydraulique de la chambre vers l'accumulateur obtenu lorsqu'un mouvement de la tige dans l'actionneur provoque une diminution du volume de la chambre hydraulique.

2. Actionneur selon la revendication 1, dans lequel le piston flottant est agencé pour pouvoir coulisser le long de la tige et entre une première butée axiale portée par la tige (2, 102) et une seconde butée axiale (109) portée par le corps (103).

3. Actionneur selon l'une quelconque des revendications 1 ou 2, dans lequel la chambre hydraulique s'étend à l'intérieur de la tige, le piston flottant (20) étant monté à coulissement étanche dans la tige (2) et contre cette tige (2).

4. Actionneur selon l'une quelconque des revendications 1 ou 2, dans lequel la chambre hydraulique s'étend entre la tige (102) et le corps (101) de l'actionneur, le piston flottant (120) étant monté à coulissement étanche entre le corps et la tige.

5. Actionneur selon l'une quelconque des revendications 1 à 4, comportant des moyens de désolidarisation commandables pour désolidariser la tige (2) et l'écrou (7).

6. Procédé d'utilisation d'un actionneur selon l'une quelconque des revendications 1 à 3, dans lequel on commande l'électrovanne pour permettre un passage de fluide entre la chambre hydraulique et l'accumulateur, puis on laisse la tige rentrer dans le corps sous l'action d'une charge attelée à la tige.

7. Procédé d'utilisation selon la revendication 6 utilisant un actionneur selon la revendication 5, dans lequel on commande les moyens de désolidarisation pour désolidariser la tige et l'écrou, avant de laisser la tige rentrer dans le corps sous l'action d'une charge attelée à la tige.

8. Procédé de surveillance d'un actionneur selon l'une quelconque des revendications 1 à 5, dans lequel on laisse libre un déplacement de la tige sous l'action d'une charge attelée à la tige, et on vérifie au moins un paramètre de fonctionnement de l'atterrisseur lié à l'amortissement hydraulique.

9. Procédé de surveillance selon la revendication 8, dans lequel le paramètre est le temps mis par la tige pour se déplacer sous l'effet de la charge.

## Patentansprüche

1. Aktor, umfassend ein Gehäuse (1; 101), in dem eine Stange (2; 102) verschiebbar gelagert ist, wobei der Aktor eine Schraube (8; 108) umfasst, die sich im Inneren der Stange erstreckt, um mit einer fest mit der Stange verbundenen Mutter (7; 107) zusammenzuwirken, wobei die Schraube von einem Motor (10; 110) in Drehung angetrieben wird, wobei der Aktor einen Akkumulator (21, 121) und ein Elektroventil (22, 122) umfasst, **dadurch gekennzeichnet, dass** eine mit Hydraulikfluid gefüllte Hydraulikkammer (CH) in dem Aktor mittels eines schwimmenden Kolbens (20; 120) ausgebildet ist, der auf dichte Weise an der Stange in dem Aktor gleitet, wobei die Hydraulikkammer mittels des Elektroventils (22; 122) in Fluidverbindung mit dem Akkumulator (21; 121) steht, wobei das Elektroventil zwischen einem geschlossenen Zustand, in dem die Kammer von dem Akkumulator isoliert ist, und einem Durchlasszustand steuerbar ist, in dem die Hydraulikkammer und der Akkumulator in Verbindung stehen, wobei ein kalibrierter Widerstand gegen den Durchlass von Hydraulikfluid von der Kammer zum Akkumulator ausgeübt wird, der erhalten wird, wenn eine Bewegung der Stange in dem Aktor eine Verringerung des Volumens der Hydraulikkammer verursacht.

2. Aktor nach Anspruch 1, bei dem der schwimmende Kolben ausgebildet ist, um entlang der Stange und zwischen einem ersten axialen Anschlag, der von der Stange (2, 102) getragen wird, und einem zweiten axialen Anschlag (109), der von dem Gehäuse (103) getragen wird, gleiten zu können.

3. Aktor nach einem der Ansprüche 1 oder 2, bei dem sich die Hydraulikkammer im Inneren der Stange erstreckt, wobei der schwimmende Kolben (20) in der Stange (2) und an dieser Stange (2) auf dichte Weise verschiebbar gelagert ist.

4. Aktor nach einem der Ansprüche 1 oder 2, bei dem sich die Hydraulikkammer zwischen der Stange (102) und dem Gehäuse (101) des Aktors erstreckt, wobei der schwimmende Kolben (120) auf dichte Weise verschiebbar zwischen dem Gehäuse und der Stange gelagert ist.

5. Aktor nach einem der Ansprüche 1 bis 4, umfassend steuerbare Trennungsmittel zum Trennen der Stange (2) und der Mutter (7).

6. Verfahren zur Verwendung eines Aktors nach einem der Ansprüche 1 bis 3, bei dem man das Elektroventil steuert, um einen Fluiddurchlass zwischen der Hydraulikkammer und dem Akkumulator zu gestatten, und man dann die Stange unter der Wirkung einer an die Stange gekoppelten Last in das Gehäuse zurückkehren lässt.

7. Verfahren zur Verwendung nach Anspruch 6, das einen Aktor nach Anspruch 5 nutzt, bei dem man die Trennungsmittel steuert, um die Stange und die Mutter zu trennen, bevor man die Stange unter der Wirkung einer an die Stange gekoppelten Last in das Gehäuse zurückkehren lässt.

8. Verfahren zur Überwachung eines Aktors nach einem der Ansprüche 1 bis 5, bei dem man eine Verschiebung der Stange unter der Wirkung einer an die Stange gekoppelten Last zulässt und man mindestens einen Funktionsparameter des mit der zylindrischen Dämpfung verbundenen Fahrwerks verifiziert.

9. Überwachungsverfahren nach Anspruch 8, bei dem der Parameter die Zeit ist, die die Stange braucht, um sich unter der Wirkung der Last zu verschieben.

## Claims

1. An actuator comprising a cylinder (1; 101) in which a rod (2; 102) is mounted to slide, the actuator having a screw (8; 108) extending inside the rod to co-operate with a nut (7; 107) secured to the rod, the screw being driven in rotation by a motor (10; 110), the actuator comprising an accumulator (21; 121) and a solenoid valve (22; 122), **characterized in that** a hydraulic chamber (CH) filled with hydraulic fluid is arranged inside the actuator by means of a floating piston (20; 120) sliding in sealed manner against the rod inside of the actuator, the hydraulic chamber being in fluid flow communication with the accumulator (21; 121) via the solenoid valve (22; 122) which is controllable between a closed state in which the chamber is isolated from the accumulator, and a fluid-passing state in which the hydraulic chamber and the accumulator are in communication, calibrated resistance being exerted against the passage of fluid from the chamber towards the accumulator as obtained when movement of the rod inside the actuator leads to a reduction in the volume of the hydraulic chamber.

2. An actuator according to claim 1, wherein the floating piston is arranged to be capable of sliding along the rod and between a first axial abutment carried by the rod (2, 102) and a second axial abutment (109) carried by the cylinder (103).

3. An actuator according to any one of claims 1 or 2, wherein the hydraulic chamber extends inside the rod, the floating piston (20) being mounted to slide in sealed manner inside the rod (2) and against said rod (2).

4. An actuator according to any one of claims 1 or 2, wherein the hydraulic chamber extends between the rod (102) and the cylinder (101) of the actuator, the floating piston (120) being mounted to slide in sealed manner between the cylinder and the rod.

5. An actuator according to any one of claims 1 to 4, including controllable separation means for separating the rod (2) and the nut (7).

6. A method of using an actuator according to any one of claims 1 to 3, wherein the solenoid valve is controlled to allow fluid to pass between the hydraulic chamber and the accumulator, and then the rod is allowed to return into the cylinder under drive from a load coupled to the rod.

7. A method of using an actuator according to claim 6, using the actuator of claim 5, wherein the separation means are controlled to separate the rod and the nut before allowing the rod to return into the cylinder under drive from a load coupled to the rod.

8. A method of monitoring an actuator according to any one of claims 1 to 5, wherein the rod is allowed to move freely under drive from a load coupled to the rod, and at least one operating parameter of a landing gear associated with the hydraulic damper is verified.

9. A method of monitoring according to claim 8, wherein the parameter is the time taken by the rod to move under the effect of the load.
